# EUROPEAN PATENT SPECIFICATION

(11) **EP 2 948 533 B1**
(45) Date of publication and mention of the grant of the patent: **13.12.2017**
(21) Application number: 13848179.1
(22) Date of filing: 24.10.2013
(51) Int. Cl.: C10L 10/00, C10L 5/36, C10L 5/44, C10L 9/10

(54) **METHOD OF PRODUCING CLEAN BURNING WOOD BIOMASS FUEL**
VERFAHREN ZUR HERSTELLUNG EINES SAUBER BRENNENDEN HOLZBIOMASSEBRENNSTOFFES
PROCÉDÉ DE PRODUCTION DE CARBURANT DE BIOMASSE DE BOIS À COMBUSTION PROPRE

(30) Priority: 25.10.2012 US 201261718397 P; 25.10.2012 US 201261718350 P
(43) Date of publication of application: 02.12.2015
(73) Proprietor: Queston Inc., Pittsford, VT 05763 (US)
(72) Inventor: ATWOOD, Mark G., Northfield, VT 05663 (US); QUERREY, Daniel Thomas, Pittsford, VT 05763 (US)
(74) Representative: FRKelly
(86) International application number: PCT/US2013/066648
(87) International publication number: WO 2014/066661

(56) References cited:
- WO-A1-79/00988
- WO-A1-2009/139621
- WO-A2-2008/073186
- US-A1- 2006 117 651
- US-A1- 2006 175 230
- US-A1- 2010 159 522
- DATABASE WPI Week 200781 Thomson Scientific, London, GB; AN 2007-877451 XP002760969, & JP 2007 246574 A (IWATE KEN) 27 September 2007 (2007-09-27)

## Description

### CROSS-REFERENCE TO RELATED APPLICATIONS

This PCT application claims the benefit under 35 U.S.C. § 119(e) of U.S. provisional patent application number 61/718,397, entitled "Method of Producing a Wood Pellet" filed on October 25, 2012 and U.S. provisional patent application number 61/718,350, entitled "The Production of an Advanced Wood Pellet" filed on October 25, 2012.

### TECHNICAL FIELD

The present invention relates generally to a method of producing a wood biomass fuel, where the wood biomass fuel has advantages upon combustion that are an improvement over conventional wood fuel pellets.

### BACKGROUND

Typically, energy is generated by combustion of conventional natural resources, such as but not limited to coal, petroleum, and natural gas products. Due to diminishing quantities of these resources and their byproducts, there is a renewed interest in obtaining alternative renewable fuel sources of energy. With the growing importance of renewable energy, the use of wood fuel pellets has increased considerably based on their relatively clean burning and high energy content. JP2007-246574 discloses the manufacture of wooden solid fuel involving adding a calcium compound to dried granular timber.

It is commonly known in the alternative fuel industry that wood pellets for fuel are generally a good source of energy due to their efficient burn and in particular, production of less ash, less smoke, and more heat compared to fossil fuel or conventional natural resources. (Hansen et al., English Handbook for Wood Pellet Combustion, Feb. 2009, National Energy Foundation, p. 1-86; http://worldwideweb.pelletsatlas.info) Wood pellets are surprisingly still advantageous over the use of wood chips even though wood chips as a source of fuel are cheaper. Wood chips contain a higher moisture content, generally around 25 weight %; whereas, conventional wood pellets have a moisture content of less than 10 weight % (RHPL Ltd.; BioEnergy Inc. "Advantages of Wood Pellets" hyper text transfer protocol://worldwideweb.bioenergyinc.ca/WoodPelletAdvantages/). The moisture content is directly related to the energy density which is the energy contained in a fuel per unit weight. Fossil fuels have the highest energy density which is up to about three times that of either wood pellets or wood chips. Wood pellets must have an energy density of 16.8 GJ/ton as required by the British BioGen code of good practice (*Ibid*.). Whereas, wood chips may vary depending on their moisture content. For example, at a moisture content ranging from 25 weight % to 50 weight %, the energy density of wood chips ranges from 14.3 GJ/ton to 9.5 GJ/ton (*Ibid*.). Thus, wood pellets are becoming the preferred choice of biofuel since fossil fuels and high quality trees are diminishing resources. Moreover, wood pellets as a source of fuel, typically require less energy to produce and transport. The quality of the wood biomass used to form wood pellets plays a role, since a less desirable wood biomass starting material may include binders, starches, oxidizing agents, chemicals, and the like, which upon burning, results in undesirable byproducts that adversely affect the environment.

It is the common understanding that wood pellet production often requires addition of a binding agent because the binding properties of the lignins naturally found in the wood biomass are insufficient for maintaining the shape and structure of wood pellets. U.S. Patent No. 4,236,897, WO 2009/139621, and WO 2009/044375 all utilize additional materials to form wood pellets, including, for example, thermoplastic materials, flours, oxidizing compounds, zeolites, adsorbents, starches, and the like. The methods of producing a wood pellet as disclosed in these publications discuss the difficulties of achieving a wood pellet without binding agents. They also disclose a moisture content of the wood that is relatively low or dry.

Some of inferior conventional pellets may be composed of impure wood products or may have been produced under unsatisfactory conditions to save costs in manufacturing the conventional wood pellets. Although use of recycled wood or cardboard as the wood biomass starting material may be beneficial for reducing the environmental impact or carbon footprint, it would not be advisable for producing a clean burning wood pellet. The recycled wood products typically contain impurities, such as for example, chemicals, glues, and inks, which would adversely affect the burn and produce undesirable byproducts of the lower quality or inferior wood pellet. Even if a higher grade wood product is used, some impurities such as rocks, metals, and fines may remain and not be removed from the wood product prior to formation of the wood pellet. Corners may be cut during the manufacturing process by utilizing wood products that have a higher moisture content. Using a lower drying temperature requires less energy, and hence less cost is required to dry the wood products having a higher moisture content. Since conventional pellet mills operate at a temperature ranging from 100°C (212°F) to 177°C (350°F) anyway, where water evaporates at 100°C (212°F) companies may forgo the extra energy needed to dry the wood products to the desired dryness. Another reason that conventional pellet mills operate at this temperature range is to obtain some natural binding properties since lignins found in wood melt at less than 200°C (392°F) (Beis, et al. (2010) "Fast Pyrolysis of Lignins," BioResources 5(3): 1408-1424).

Unfortunately, the byproducts created when burning conventional wood pellets as a fuel source that contain additional components, binders, impurities, and the like are undesirable. Conventional wood pellet byproducts include solids such as ash and vapors that include various forms of acid, dioxides, and other chemicals that are harmful to the environment. Moreover, the smoke produced by burning conventional wood fuel pellets that contain numerous harmful chemicals and additives is also detrimental to the environment.

Therefore, there is a need for a wood biomass fuel that does not produce, or drastically reduces, the objectionable byproducts that typically result from burning conventional wood pellets, and yet burn more efficiently than conventional wood pellets. Also, there is a continuing need for an efficient method of producing such clean burning wood biomass fuels. Moreover, in addition to reducing the environmental byproducts, an efficient method of manufacture that utilizes fewer inputs, fewer parts or components in the assembly line, expedites the rate of production, and thereby, reduces the time from production to user are also desirable.

### SUMMARY

The deficiencies of the prior art, namely the production of the undesirable byproducts, are substantially overcome in consideration of the invention disclosed herein. More specifically, additional innovation and advantages are realized when configuring the inventive method to obtain a desired result during the production stages and a desired result during the burning of the wood pellet.

The object of the invention relates to a method of producing a clean burning wood biomass fuel, where the method comprises applying a calcium carbonate to a wood biomass to form a mixture, and forming a wood biomass fuel from the mixture at an elevated temperature.

These and other features, aspects and advantages of the present invention will become better understood with reference to the following drawings, description, and claims.

### BRIEF DESCRIPTION OF THE DRAWINGS

FIG. 1 shows the acetic acid exhaust gas graphical analysis after combusting a conventional wood pellet (FIG. 1A) and an inventive wood biomass fuel (FIG. 1B).
FIG. 2 illustrates a flow diagram for producing clean burning wood fuel pellets according to an exemplary embodiment of the present invention.
FIG. 3 illustrates a block diagram of a system for producing clean burning wood fuel pellets according to the exemplary embodiment of FIG. 2.

### DETAILED DESCRIPTION

The following detailed description is of the best currently contemplated modes of carrying out exemplary embodiments of the invention. The description is not to be taken in a limiting sense, but is made merely for the purpose of illustrating the general principles of the invention, since the scope of the invention is defined by the appended claims.

Various inventive features are described below that can each be used independently of one another or in combination with other features.

Broadly, embodiments of the present invention generally provide a method for producing wood biomass fuels containing calcium carbonate (CaCO₃). These wood biomass fuels burn cleaner, have few, if any, impurities that would adversely affect a clean burn, and may even utilize typically inferior wood biomass and still produce the beneficial clean burning wood biomass fuels.

A method of incorporating calcium carbonate into a wood biomass fuel is disclosed where the method enables the production of a wood biomass fuel, which when the wood biomass is burned, it produces less ash and the resulting vapors contain less acid. Furthermore the method of incorporating calcium carbonate into a wood biomass fuel directly relates to the desired results of reducing the level of acid and environmental contaminants, such as, for example, greenhouse gases, methane gas, nitrogen oxides, and carbon monoxide. This is more specifically realized when the method of producing a clean burning wood biomass fuel comprises mixing a wood biomass and calcium carbonate.

In the method of producing a wood biomass fuel in the present invention where the desired result is to include the substance, calcium carbonate, such that the desired result equals less acid in the vapor and less ash when burned, the method of production includes the addition of the calcium carbonate prior to the formation of the wood biomass fuel. In one embodiment, the method of producing a clean burning wood biomass fuel is directed to steps that mix a wood biomass or a supply of wood biomass and a calcium carbonate or a supply of calcium carbonate, where the calcium carbonate, as defined here, may be pure calcium carbonate, substantially pure, or the calcium carbonate may be a part by volume of another substance containing inert material. Non-limiting examples of inert materials that may be found in calcium carbonate tailings, for example, include vegetable oil, animal fat, which may include, for example, chlorite, plagioclase, feldspar, quartz, mica, barium, toluene, petroleum products, tall oil, ortho-phenyl phenol, acetone, isopropyl alcohol, stearic acid, polyacrylamide, acrylamide monomer, polyacrylates, phosphorus, methyl isothiocyanate, ethylamine, and free chlorine.

The calcium carbonate useful for the inventive method may have a particle size ranging from about 0.1 microns to about 100 microns. In a preferred embodiment, the particle size ranges from about 0.1 microns to about 50 microns, and more preferably, the calcium carbonate particle size is about 0.2 microns. These lower ranges of particle size may allow the CaCO₃ to better mix with or coat the wood biomass. In addition, this range of particle size may also assist to expedite the chemical reaction between the CaCO₃ and the acids found in the wood biomass.

Another embodiment is directed to a particle size that is sufficient to completely cover the wood biomass. The calcium carbonate particle size must be sufficiently sized to cover at least about 80 % of the wood biomass. In preferred embodiments, the calcium carbonate covers at least about 85 %, about 90 %, or about 95 % of the wood biomass surface, and most preferably, the calcium carbonate covers about 100% of the wood biomass surface.

The amount of CaCO₃ added to the wood biomass may represent between about 0.2 weight % to about 2.0 weight % of the wood biomass during production of the wood biomass fuel. The addition of CaCO₃ to the wood biomass in the amount of about 0.2 weight % to about 2 weight % may greatly reduce or eliminate many of the pollutants typically found in conventional wood pellets by chemically reacting the CaCO₃ in the inventive clean burning wood biomass fuel with chemicals found in the wood biomass having a pH of less than about 7 (*i.e*., for example, organic acids), thereby resulting in the production of a calcium salt, water, and carbon dioxide.

The calcium carbonate may be applied to the wood biomass by sprinkling a consistent layer onto the wood biomass, with or without shaking, in order to distribute the calcium carbonate evenly on the surface of the wood biomass. Alternatively, or additionally, the wood biomass and calcium carbonate may be mixed in a mixer, tumbler, drum blender, double cone blender, screw blender, or the like. Regardless of the method that may be used to apply calcium carbonate to the wood biomass, calcium carbonate should sufficiently cover the surface or exterior of the wood biomass. Essentially, at least about 80 % to about 100% of the wood biomass surface should be covered with calcium carbonate, or preferably about 90% to about 100% of the wood biomass surface should be covered with calcium carbonate, where some calcium carbonate may be of a particle size that enables the calcium carbonate to fit on the surface of and in the surface pores of the wood biomass. The wood biomass starting material for producing the wood biomass fuel described here may be from hardwood, softwood, recycled wood, wood parts, including but not limited to wood chips, shavings, sawdust, bark, branches, and the like. Non-limiting examples of softwoods include conifers, pine, cedar, fir hemlock, redwood, cherry, elm, and spruce, while hardwoods are from deciduous trees, such as but not limited to, hickory, oak, ash, cherry, maple, beech, birch, walnut, and poplar. Other types of wood may also be useful, including but not limited to, mahogany, rosewood, teak, and wenge. The described method advantageously makes use of a variety of wood types which may be less pure, as compared to conventional wood pellets which prefer using a high quality wood that does not contain bark, paper, cardboard products, or other impurities.

Both hardwoods and softwoods may primarily contain three components: cellulose at about 40% to 50% by weight, hemicelluloses at about 20% to 30% by weight and lignin at about 20% to 30% by weight. Studies have shown that hardwoods and softwoods produce different levels of pollutants, ash, and heat. This requires the addition of different levels of CaCO₃ during the manufacturing process to achieve the desired reduction of pollutants in the emissions and the ash.

The wood biomass may be composed of various sized parts of wood or tree materials generally no larger than the size of the desired wood biomass fuel final product. As it is understood by one of skill in the art, the wood biomass fuel may be formed into any shape or size. A preferred shape of the wood biomass fuel is that of a pellet which may be particularly useful for burning in wood pellet stoves. Although the wood biomass fuel may preferably be in the shape of a pellet as formed by a pellet mill, any shape is contemplated using compression equipment that shapes the wood biomass fuel into the desired shape. The wood biomass fuel may alternatively be in the shape of a disc, briquette, cube, and the like. However, one advantage of a wood biomass fuel in the shape of a pellet is the ease of transport and storage. The pellet having a uniform size and shape allows for a large capacity to be easily transported and stored.

Since the preferred shape of the clean burning wood biomass fuel is that of a pellet, the exemplary operating system uses a pellet mill to form the clean burning wood biomass fuel. Although any size of the wood biomass may be used, the preferred predetermined wood biomass size may be about three-sixteenth of an inch (³/₁₆ inch) in diameter, or of a size such that the wood biomass may pass through a quarter-inch die that is part of a pellet mill. In another embodiment, the predetermined wood biomass size would have a diameter that is sufficient for fitting in an appropriately sized pellet mill die.

Although the art teaches away from using wood chips as a fuel because of their high moisture content and low energy density, the inventive wood biomass fuel preferably has a moisture content similar to that found in wood chips, which is higher than conventional wood pellets. The moisture content of the wood biomass starting material prior to formation of the wood biomass fuel may range from about 10 weight % to about 25 weight % and preferably from about 13 weight % to about 15 weight %, where the moisture content percent is based on the ratio of the weight of water to the total weight of water and the dry weight of the wood biomass. This is in contrast to the moisture content of conventional wood pellets which preferably have a lower moisture content to result in a more efficient wood pellet since less energy is necessary to form and burn the wood pellet as compared to high moisture containing wood chips. (Nielsen, et al. "Analysis Methods for Pelletizing Properties of Wood," Wood and Fiber Science, 41(4), 2009, pp. 414-425). Hansen et al. at report that the water content in the raw material must be about 10 % before the pellet process begins and that a water content, or moisture content, of higher than 15 weight % makes the raw material difficult to form pellets (English Handbook for Wood Pellet Combustion, Feb. 2009, pp.1-86).

Although any pellet mill may be utilized, a preferred pellet mill may withstand and operate at an elevated temperature greater than about 288°C (550 °F). In a preferred embodiment, the elevated temperature or operating temperature ranges from about 288°C (550°F) to about 343°C (650°F). This elevated temperature range is about 1.5 to about 3 times that of the temperature range at which pellet mills typically operate for producing conventional wood pellets. Conventional wood pellets may be formed under a temperature ranging from 100°C (212°F) to 177°C (350°F) because water evaporates at 100°C (212°F) and a drier wood pellet assists with combustion. Nielsen, et al. reported unpublished data that the heat generated by the pelletizing process maintained the operating die temperature at 110 °C to 130 °C (*i.e*., 230 °F to 266 °F) (Nielsen, et al. "Analysis Methods for Pelletizing Properties of Wood," Wood and Fiber Science, 41(4), 2009, pp. 414-425). Since lignins from wood may act as a natural binder, methods of manufacturing conventional wood pellets typically take advantage of that property and operate at a temperature around 149°C (300°F) which is the temperature at which lignins melts. Moreover, methods of producing conventional wood pellets strive to be efficient and using such elevated temperatures would typically be thought to be excessive for producing a conventional wood pellet. This elevated temperature would not be desirable for forming a conventional wood pellet because the energy required to produce the pellet would be more than the benefits achieved upon combustion. In fact, one of skill in the art would believe that the inventive method is very inefficient since so much energy would be wasted to form the wood biomass fuel. Moreover, conventional methods avoid such elevated temperatures since wood ignites at 300°C (572°F). Despite the problems and perceived inefficiencies that arise from operating at a temperature greater than about 288°C (550°F) the inventive clean burning wood biomass fuel may be produced at a temperature ranging from about 288°C (550°F) to about 343°C (650°F) more preferably from about 296°C (565°F) to about 302°C (575°F) while the most preferred temperature may be one that mostly reacts the calcium carbonate and the organic compounds (for example, organic acids) found in wood biomass. The higher moisture content of the wood biomass is necessary for the method of producing the inventive wood biomass fuels in order to avoid ignition of the wood during the production stage and is one of the parameters for controlling the operation to avoid ignition.

In view of the elevated temperature necessary to achieve the desired clean burning wood biomass fuel, the wood biomass should not remain in the pellet mill for an extended period of time. More specifically, the wood should not be in contact with the die during compression to form the wood biomass fuel longer than necessary since wood naturally ignites at a temperature of 300°C (572°F). Another parameter that may be utilized for controlling the operation of forming the desired wood biomass fuel is the length of time that the wood biomass is under compression or, for example, in the die of the pellet mill when forming wood biomass fuel pellets. The preferred length of time ranges from about 0.25 seconds to about 1 second, and more preferably, about 0.5 seconds. If the wood biomass remains in the die or in contact with equipment that operates at the elevated temperatures above the wood ignition temperature, more moisture in the wood biomass may evaporate resulting in a drier wood biomass that can more easily ignite. Therefore, in addition to moisture content, time is another parameter used to control the method of producing the desired wood biomass fuel.

The elevated temperature was found to be one means for completely reacting calcium carbonate and the organic compounds naturally found in wood biomass. Typically, when wood is burned as fuel, the exhaust or resulting gases contain these undesirable and hazardous organic compounds or acids. Essentially, the acids in the wood remain and are subsequently burned resulting in acidic gases. Therefore, in order to reduce the volatile organic compounds (VOCs) that are naturally found in wood and that remain in the exhaust gases upon combustion of the wood, a means for removing the VOCs from the wood or the exhaust gases is highly desirable. The inventive method described here achieves neutralization of substantially all of the VOCs. Major organic acids found in wood include, but are not limited to, formic acid, acetic acid, propanoic acid, butanoic acid, phenolic acid, and benzoic acid. Reacting these and any other detrimental acids found in wood with calcium carbonate essentially results in the production of water, carbon dioxide, and a calcium salt, all of which are more desirable as they are not toxic or hazardous to the environment; however some residual calcium carbonate may be present. Acids in the exhaust gas that occurs typically when conventional wood pellets are burned are not desirable and in fact toxic to the environment. However, when the inventive clean burning wood biomass fuel is burned or combusted, all of the byproducts may be recycled. Namely, water, carbon dioxide, and the resulting calcium salt may be recycled as, for example, food preservatives, feed supplements, mold inhibitors, medical treatments, and starting materials for synthesizing materials.

Briefly, the method of producing a clean burning wood biomass fuel as described here involves, in one embodiment of the invention, applying, distributing, coating, or sprinkling, all of which may be used interchangeably here, calcium carbonate onto the outer surface of the wood biomass in a uniform, consistent, and even fashion. The application of the calcium carbonate at this stage is not critical and other methods may be used such that the calcium carbonate evenly covers about 80 % to about 100 %, more preferably about 90 % to about 100 %, of the surface of the wood biomass, preferably in a uniform, consistent manner. Non-limiting examples of methods for applying the calcium carbonate onto the wood biomass may include distributing the calcium carbonate by releasing the calcium carbonate, spraying the calcium carbonate, mixing the calcium carbonate, coating the calcium carbonate, applying the calcium carbonate, and the like onto the wood biomass. In another embodiment, the wood biomass and the calcium carbonate may be mixed through a type of tumbling or mixing process to ensure adequate coverage either subsequently to the application of the calcium carbonate to the wood biomass or in lieu of the application. Mixing the calcium carbonate and the wood biomass essentially results in the calcium carbonate coating the wood biomass. Another embodiment is directed to the amount by weight of the wood biomass and calcium carbonate. The preferred amount of calcium carbonate to wood biomass ranges between about 0.2 weight percent to about 2 weight percent and more preferably from about 1.8 weight % to about 2 weight %. Upon completion of mixing the wood biomass and the calcium carbonate, a wood biomass mixture or mixture results.

The next step is to introduce the wood biomass mixture into, for example, a pellet mill, which has the ability to compress the wood biomass mixture by means of pressure into a wood biomass fuel of the desired size and shape. This high pressure causes heat to form whereby the high pressure and heat causes the calcium carbonate to react with the various forms of acid in the wood biomass such that a chemical reaction occurs.As previously described, the chemical reaction that the inventive method of producing a clean burning wood biomass fuel achieves neutralizes the acid naturally found in the wood biomass, thereby producing the desired clean burning wood biomass fuel.. This enables a significant reduction in the VOC or acid levels in the smoke when the wood biomass fuels are burned. Such VOCs or acid is undesirable for the environment. Acetic acid, for example, may include other forms of acid including but not limited to formic acid, propanoic acid, butanoic acid, phenolic acid, and benzoic acid. One embodiment of the chemical reaction that occurs to neutralize the various forms of acid is further illustrated in TABLE 1 below.

**TABLE 1**

| **Acid** | **Addition of Substance** | **Reaction Results** |
|---|---|---|
| Acetic acid - 2C₂H₄O₂ | Calcium Carbonate - CaCO₃ | H₂O, CO₂, and Calcium Ethanoate or Calcium Acetate - Ca(CH₃COO)₂ [+ residual CaCO₃ and acid] |

To enable the chemical reaction between the calcium carbonate and the acidic properties, other parameters have to be considered to yield the preferred desired outcome during the production of the advanced wood biomass fuel. Such parameters include the amount of other materials and impurities in the wood biomass, the amount of water in the wood biomass, the temperature of the operation, the time the wood biomass is exposed to the temperatures, etc.

The step during which the equipment forms the desired wood biomass fuel, for example, a pellet mill, by applying high pressure and heat must be considered in the method of producing a wood biomass fuel as described here since the high pressure and temperature may cause the wood to self-ignite. Additionally, if there is too much water, or too high of a moisture content, the pellet mill will not generate enough heat to bind the wood biomass into a shape that does not fall apart, nor will the desired chemical reaction occur. Therefore, it is important in that in this step the amount of moisture within the wood biomass fuel be in the range from about 10 weight % to about 25 weight %, preferably about 13 weight % to about 15 weight %. Another parameter that is important during the step of applying high pressure and heat to a wood biomass such that it does not ignite when the wood biomass fuel is formed is the level of heat as the pellet mill applies high pressure. The temperature cannot be too low such that the wood biomass fuel loses its shape and structure and the desired chemical reaction or neutralization of acid cannot occur, and the heat cannot be too high such that the wood biomass fuel ignites during or soon after exiting the pellet mill or die of the pellet mill. A preferred temperature range is between about 288°C (550°F) and about 343°C (650°F) degrees Fahrenheit. Additionally, the time during which the wood biomass fuel is compressed in the die is preferably for an amount of time ranging from about 0.25 seconds to about 1 second. However, if the time is extended then the temperature range would need to decrease otherwise the wood biomass would more likely ignite since the moisture in the wood biomass evaporates, thereby drying the wood biomass making it more susceptible to self-igniting.

Additionally, as the wood biomass fuel exits the pellet mill they are configured such that when the wood biomass fuel is burned, the acetic acid levels is lower. This advantage is in some part due to the neutralization of the acetic acid that occurs during the method of production, and partly due to any remaining calcium carbonate available to neutralize other environment contaminants resulting in reduced byproducts, such as for example, solids (*e.g.,* ash), vapors (*e.g.,* smoke), and undesirable components found in the solids and vapors. Other environmental contaminants such as methane gas, nitrogen oxides, and carbon monoxide are also lower. Under the preferred embodiment described here, a reduction in levels of environmental contaminates such as methane gas can be as much as about 48 %, a reduction in nitrogen oxides can be as much as about 20 % to about 45%, and a reduction in carbon monoxide can be as much as about 55 % to about 60 %. Moreover, the primary components that result in acid rain formation, sulfur dioxide (SO₂) and nitrogen oxides (NOₓ) may be reduced. Emission of nitrogen oxides and sulfur dioxides may be reduced by about 20 % to about 45 % and about 64 %, respectively. With the addition of the calcium carbonate in the wood biomass fuel, the level of BTUs also increased by as much as about 11 % to about 13 % when compared to a conventional wood pellet. The inventive method of producing the inventive wood biomass fuel enables the wood biomass fuel to burn more completely, leaving less ash by volume, and extracting more energy from the wood biomass fuel. Essentially the wood biomass fuel that burns at a higher or hotter temperature results in a more complete combustion, which results in less solid byproduct, or ash. The chemical reactions that occur when the wood biomass fuel is burned are identified in TABLE 2 below.

**TABLE 2**

| **CHEMICAL REACTION:** | **CALCIUM SALT PRODUCED** |
|---|---|
| Acid + Calcium Carbonate = Water + Carbon Dioxide + Calcium Salt [+ residual Acid and Calcium Carbonate] | |
| 2CH₂O₂ + CaCO₃ = H₂O + CO₂ + Ca(CHO₂)₂ | Calcium methanoate |
| 2C₂H₄O₂ + CaCO₃ = H₂O + CO₂ + Ca(C₂H₃O₂)₂ | Calcium ethanoate |
| 2C₃H₆O₂ + CaCO₃ = H₂O + CO₂ + Ca(C₃H₅O₂)₂ | Calcium propanoate |
| 2C₄H₈O₂ + CaCO₃ = H₂O + CO₂ + Ca(C₄H₇O₂)₂ | Calcium butanoate |
| 2C₆H₆O + CaCO₃ = H₂O + CO₂ + Ca(C₆H₅O₂)₂ | Calcium phenoate |
| 2C₇H₆O₂ + CaCO₃ = H₂O + CO₂ + Ca(C₇H₅O₂)₂ | Calcium benzoate |

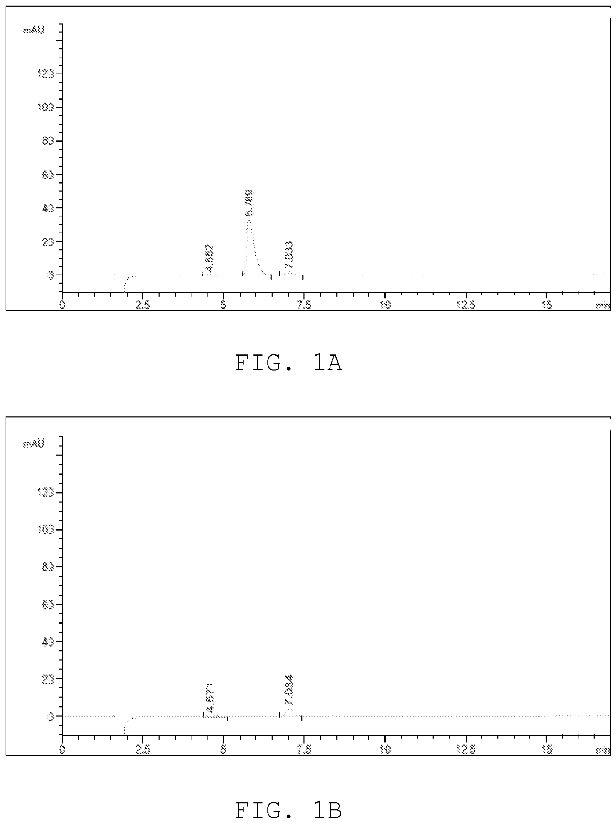

A comparison of the results of high performance liquid chromatography (HPLC) analysis of acetic acid levels in the exhaust gas of a conventional wood pellet and the acetic acid levels in the exhaust gas of the inventive wood biomass fuel when they are burned was performed. The time taken for a particular compound to travel through the column of the HPLC device to the detector is known as its retention time. This time is measured from the time at which the sample is injected into the HPLC device to the point at which the display shows a maximum peak height for that compound. Different compounds have different retention times. When the conventional wood pellet exhaust gas sample was analyzed (FIG. 1A), acetic acid was found to produce a peak labeled at 5.789 minutes and a retention time of 3.983 minutes (*i.e*., from the time of sample injection to detection). However, there was no peak when the acetic acid level was analyzed from the exhaust gas or burning of the inventive wood biomass fuel. Specifically, the 5.789 minutes acetic acid peak (or peak having a retention time of 3.983 minutes) was absent, indicating that there was no acetic acid found in the exhaust gas resulting from burning the inventive clean burning wood biomass fuel (FIG. 1B).

Furthermore, the pellet mill must be operated to apply the amount of pressure that generates the advantageous amount of heat such that the wood biomass fuels do not ignite during or soon after the wood biomass fuel exits the pellet mill. In this preferred embodiment, the wood biomass that is mixed with the calcium carbonate must have about 10 percent to about 25 % water by volume.

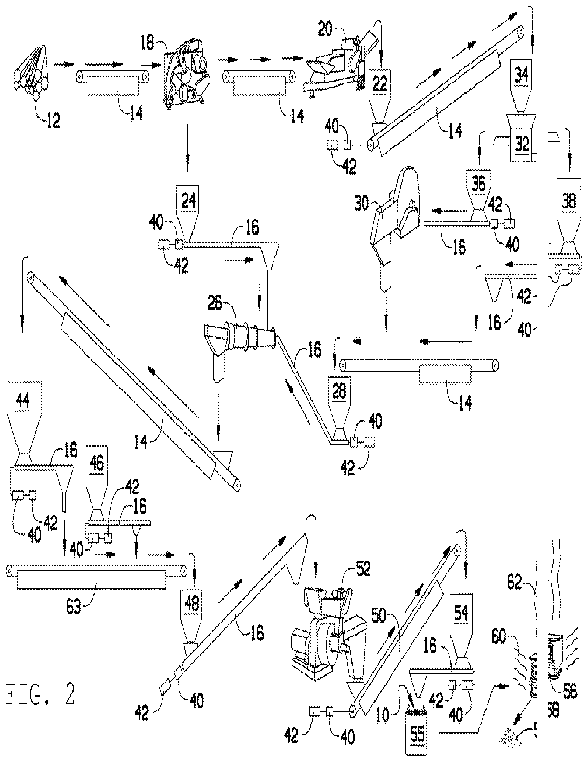

FIG. 2 illustrates a flow diagram for producing clean burning wood biomass fuel pellets **10** according to an exemplary embodiment of the present invention.

These clean burning wood biomass fuels, preferably wood biomass fuel pellets, **10** may be manufactured using any conventional methods of producing wood fuel pellets as long as calcium carbonate (CaCO₃) may be added during the manufacturing process and the process operates at an elevated temperature ranging from about 288°C (550°F) to about 343°C (650°F). To better understand the present invention, the present invention may be explained by using one of the several conventional methods of producing wood pellets. Conventional pellet production is widely known and understood by those of skill in the art. The benefits of pellets and their production methods are generally discussed in "The Beginners Guide To Pellet Production." (hypertexttransferprotocol://worldwideweb.weedcenter.org/mrwc/docs/The_Beginners_Guid e_To_Making_Pellets.pdf; worldwideweb.PelHeat.com)

In one embodiment of the invention, the wood biomass fuel may be produced into a pellet using the exemplary operating system. The tree (not shown) may be cut into logs **12** of desired size. The logs **12** may be transported by a conveyor belt **14** to a debarker **18.** The debarker **18** may remove the bark (not shown) from the log **12.** The debarker **18** may be a ring debarker, a drum debarker, or a Rosserhead debarker. Next, the log **12** may be transported by a conveyor belt **14** to a log chipper **20.** The log **12** may be fragmented into chips inside the log chipper **20.** The size of the chips may depend on the specification of the hammer mill for continuous material flow. The chips (not shown) may be fed into a chip bin **22,** which feeds a conveyor belt **14** powered by a motor **40** controlled by a variable speed drive **42.** The conveyor belt **14** transports the chips (not shown) to a screen feed bin **34** prior to entering a shaker screen **32.** Inside the shaker screen **34,** the chips may be separated based on their size. In some embodiments, the predetermined size may be ¼ of an inch. Chips (not shown) having a size greater than the predetermined size, may be fed to a hopper **36** connected to a screw conveyor **16.** The screw conveyor **16** may be powered by a motor **40** controlled by a variable speed drive **42.** The screw conveyor **16** may transport the chips (not shown) having a size greater than the predetermined size to a hammer mill **30** to further reduce the size of the chips (not shown). The output of the hammer mill **30** may be fed onto a conveyor **14** operatively connected to a bin **28** containing the chips (not shown) having the predetermined size. Chips (not shown) having a size of less than the predetermined size, may be fed to a hopper **38** connected to a screw conveyor **16.** The screw conveyor **16** may be powered by a motor **40** controlled by a variable speed drive **42.** The screw conveyor **16** may transport the chips (not shown) having a size of less than the predetermined size to the bin **28** containing the chips (not shown) having the predetermined size.

The bark (not shown) may be fed to a bark bin **24** which may be connected to a screw conveyor **16** powered by a motor **40** controlled by a variable speed drive **42.** The bark (not shown) and the chips (not shown) present in the bin **28** may be fed into a tumble dryer **26.** The tumble dryer **26** may dry the chips and bark to a moisture content between about 10 weight % and 25 weight %. The tumble dryer **26** may be operatively connected to a conveyor belt **14** powered by a motor **40** controlled by a variable speed drive **42.** The conveyor belt **14** may feed the dried chips and bark (not shown) to a finished chips hopper **44** which may be connected to a screw conveyor **16** powered by a motor **40** controlled by a variable speed drive **42.** The screw conveyor **16** may transport the dried chips (not shown) into a mixing conveyor belt **63.** A predetermined amount of CaCO₃ may be fed into the mixing conveyor belt **63** by a dispenser **46.** The mixing conveyor belt **63** may feed the mixture into a mixing bin **48.** The mixing bin **48** may be operatively connected to a screw conveyor **16** powered by a motor **40** controlled by a variable speed drive **42.** The mixture (not shown) may be fed into a pellet mill **52.** No binding agents are added to the pellet mill **52.** The mixture (not shown) may be then pelletized inside the pellet mill **52** forming the clean burning wood biomass fuel pellets **10.** The clean burning wood biomass fuel pellets **10** may have a length/diameter ratio of 2:1 to optimize the combustion and emission process. The clean burning wood biomass fuel pellets **10** may be transported by a cooling conveyer **50** into a clean burning wood biomass fuel pellets bin **54.** Then, the clean burning wood biomass fuel pellets **10** may be transported by a screw conveyor **16** to a storage bin **55.** The clean burning wood biomass fuel pellets may be transported to distributers and/or users. The user (not shown) may feed the clean burning wood biomass fuel pellets **10** to a wood pellet boiler or stove **56.** The boiler or stove **56** may emit heat **60** to the surrounding areas. Any ash **58** that may be a byproduct of the combustion of the wood biomass fuel pellet coming out of the stove or boiler **56** may have a low pH and may be used as filler for fertilizers and concrete. While the limited gas emission **62** produced by the stove or boiler **56** may contain water and CO₂.

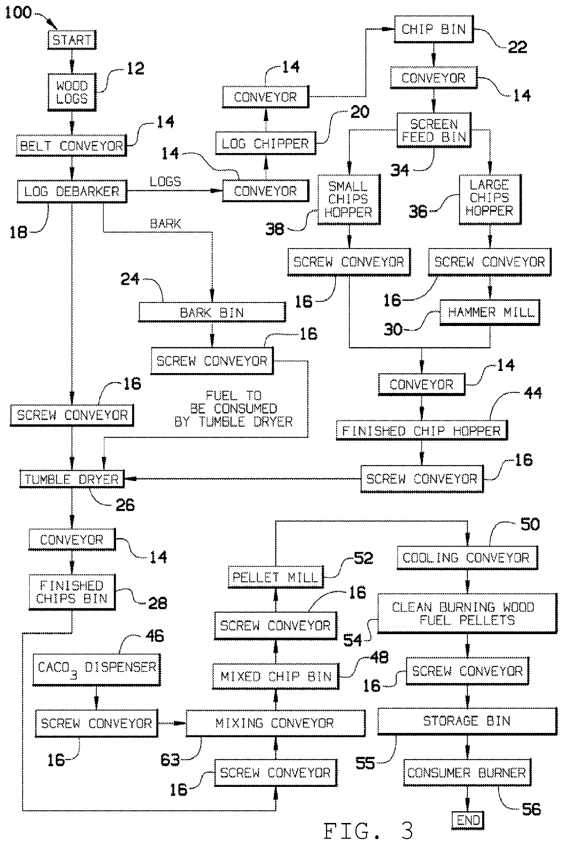

FIG. 3 illustrates a block flow diagram of a system **100** for producing clean burning wood biomass fuel pellets **10** according to the exemplary embodiment of FIG. 2.

In one embodiment, a mixture of wood biomass evenly coated with calcium carbonate may be introduced into a pellet mill. Pellet mills generally have at least one roller and at least one die, where the die may have a plurality of die holes. The roller may have a plurality of paddles such that the paddles are in contact with and create pressure against the die and the proximal end of the die holes as the roller is driven over the die at a specific pressure and rate. The wood biomass mixture may be introduced to the pellet mill in a manner that presents the wood biomass to the paddles of the roller as the roller is driven over the die. The paddles may be specifically designed such that they compress the wood biomass and drive the wood biomass into the die and the proximal end of the die holes. The compression and the heat generated under the pressure assists in the chemical reaction between the acids of the wood biomass and the calcium carbonate. For example, the pressure may generate heat ranging from a temperature of about 288°C (550°F) to about 343°C (650°F) more preferably at a temperature of about 300°C (570°F). As additional wood biomass is introduced (see, for example, FIG. 2), the inventive wood biomass fuel production repeats by again introducing another mixture of wood biomass and calcium carbonate to the roller and die and driving more of the wood biomass and calcium carbonate mixture into the die and the proximal end of the die holes. As the new supply of material is driven into the proximal end of the die holes, the previous wood biomass and calcium carbonate mixture that may be found residing in the proximal end of the die hole is then driven towards the distal end of the die holes to form a wood biomass fuel in the shape of a pellet. Additionally, the heat resulting from the friction and pressure may cause a wood biomass mixture to maintain its form as a pellet as it exits the distal end of the die holes.

This method of producing a clean burning wood biomass fuel is advantageous and an improvement over the art in that only two ingredients or starting materials are needed, *i.e.,* wood biomass and calcium carbonate. Only essentially two suppliers would be necessary to provide the wood biomass and the calcium carbonate. By having fewer starting material ingredients, the machinery necessary for executing the method may also require fewer parts and elements, thereby expediting the time from loading the starting materials to the completion and production of the desired clean burning wood biomass fuel. If the demand is great enough, the wood biomass fuel may be produced at such a rate that there would be little storage time and as soon as the wood biomass fuel is packaged, it could be immediately transported to the distributor or consumer. Although the energy needed to produce the wood biomass fuel may seem to be great, the benefits of the production of the clean burning wood biomass fuel and the fuel itself may outweigh the energy input.

### EXAMPLES

### EXAMPLE 1

### NEUTRALIZATION OF ACETIC ACID IN WOOD BIOMASS

Burning 1 kg of wood may typically produce approximately 1.8 to 2.4 g of acetic acid. The chemical make-up of the acetic acid is 2CH₃COOH. However, when the acetic acid reacts with calcium carbonate at elevated temperatures, the reaction creates water (H₂O), carbon dioxide (CO₂), and calcium acetate or calcium ethanoate [Ca(C₂H₃O₂)₂]. This chemical reaction basically neutralizes or eliminates the largest occurring acid, *i.e.,* acetic acid, in the byproducts, smoke and ash.

### EXAMPLE 2

### METHOD OF PRODUCING A CLEAN BURNING WOOD BIOMASS FUEL PELLET

Based on a one ton batch, 18 kilograms (kg) of calcium carbonate (CaCO₃) having a particle size of about 0.2 microns was evenly distributed onto 907 kg of Northern white pine wood chips (³/₁₆-inch; moisture content of about 12 weight %) such that at least about 80% of the surface of the wood chips was covered. The mixture of CaCO₃ and wood chips was then mixed in a mixer. The mixture was then conveyed to a pellet mill (Model 26LM; Andritz Sprout A/S; Muncy, Pennsylvania, USA) which milled or compressed the mixture in a pellet die of the pellet mill at a rate of about 517 RPM under a temperature of 302°C (575°F) for about 0.5 second to form wood biomass fuel pellets. As is understood in the art, the rate of milling depends on the size and capability of the pellet mill. After the pellet has been formed, they may be immediately cooled down or through the final processing step for transport, *i.e.,* cooled down indirectly. They may then be prepared for storage and/or transporting to their final destination. The pellets that were produced are approximately ½ - inch in length and ¼ -inch in diameter.

### EXAMPLE 3

### COMPARATIVE ANALYSIS OF EXHAUST GAS FROM COMBUSTING CONVENTIONAL WOOD PELLET AND CLEAN BURNING WOOD BIOMASS FUEL

The exhaust gases produced by combusting a batch of conventional wood pellets and a batch of clean burning wood biomass fuel pellets were separately analyzed by HPLC. The batches of pellets that were used contained 2.4 kg (5.4 lbs) of pellets that burned for a total of one hour and twenty-five minutes in a Quadra-Fire® pellet stove (Colville, Washington) and the temperature of the exhaust gases reached 171°C (340°F). The exhaust gases or smoke was collected for HPLC analysis. This process and sample collection was repeated four times.

FIG. 1 shows the results of samples that were analyzed for acetic acid. Chromatography was used to separate the elements found in the byproducts when the wood was burned, specifically analyzing the levels of acetic acid. The samples were analyzed using a Multiplier of 1, a Dilution factor of 1, an injection volume of 75 microliters (µl), and a wavelength of 219 nanometers (nm). The resulting graphs show milli-absorbance units (mAU) on the Y-axis and minutes (min) on the X-axis (FIG. 1).

The level of acetic acid in exhaust gas or smoke from burning conventional wood pellets had a chromatographic peak at 5.789 minutes or a retention time of 3.983 minutes (FIG. 1A). However, the peak demonstrating the level of acetic acid in exhaust gas or smoke from burning the conventional wood pellet was absent from the exhaust gas when the wood biomass fuel pellet was burned as demonstrated in FIG. 1B. Specifically, the absence of the peak at 5.789 minutes (or a retention time of 3.983 minutes) demonstrated that there was no acetic acid in the exhaust gas. Therefore, the combination of wood biomass and calcium carbonate in the wood biomass fuel resulted in a neutralized chemical reaction such that in this example, no acetic acid was present.

Additional analyses of other exhaust gas byproducts were also performed. These tests analyzed carbon monoxide, carbon dioxide, nitrogen oxides, sulfur dioxide, methane, and oxygen found in the byproducts. The results showed that the conventional wood pellet (TABLE 3) had a higher output of the various gases compared to the clean burning wood biomass fuel (TABLE 4). However, the stack temperature of the clean burning wood pellet was higher than that of the conventional wood pellet. Specifically, the average stack temperature of the conventional wood pellet was 150°C (302°F) whereas, the average stack temperature of the clean burning wood biomass fuel was 171°C (340°F). This confirms that the clean burning wood biomass fuel produces a hotter and cleaner burn when compared to conventional wood pellets.

**TABLE 3**

| | | | | |
|---|---|---|---|---|
| Run | | 1 | 2 | 3 |
| Start Time | | 810 | 847 | 1825 |
| End Time | | 840 | 917 | 1855 |
| Carbon Monoxide | PPM @ 5 % O2 | 1822.99 | 1946.35 | **2508.71** |
| | LB/MMBtu | 1.555 | 1.648 | **2.111** |
| | LB/HR | 0.0486 | .0525 | **0.0611** |
| Nitrogen Oxides | PPM @ 5 % O2 | 468.78 | 473.95 | **484.73** |
| | LB/MMBtu | .657 | .659 | **.674** |
| | LB/HR | 0.0206 | 0.0210 | **0.0194** |
| Sulfur Dioxide | PPM @ 5 % O2 | 7.31 | 7.62 | **5.5** |
| | LB/MMBtu | .014 | .015 | **.011** |
| | LB/HR | 0.0004 | 0.0085 | **0.0003** |
| THC as Methane | PPM @ 5 % O2 | 63.56 | 62.60 | **02.54** |
| | LB/MMBtu | .031 | .030 | **0.045** |
| | LB/HR | 0.0010 | 0.0010 | **0.0013** |
| Carbon Dioxide | % dv | 2.39 | 2.47 | **2.13** |
| | LB/HR | 6.53 | 6.66 | **6.04** |
| Oxygen | | 18.46 | 18.40 | **18.76** |
| Moisture Content | % | 1.5 | 2.0 | **2.4** |
| Stack Flow | DSCFH | 2396 | 2358 | **2490** |
| | ACFH | 3544 | 3587 | **3663** |
| Stack Temp | Degrees F | 300 | 317 | **288** |

**TABLE 4**

| | | | | |
|---|---|---|---|---|
| Run | | 1 | 2 | **AVG** |
| Start Time | | 1000 | 1036 | - |
| End Time | | 1030 | 1106 | - |
| Carbon Monoxide | PPM @ 5 % O2 | 770.83 | 1115.2 | **943** |
| | LB/MMBtu | 0.649 | 0.938 | **.794** |
| | LB/HR | 0.0225 | 0.0325 | **0.275** |
| Nitrogen Oxides | PPM @ 5 % O2 | 229.03 | 295.98 | **263** |
| | LB/MMBtu | 0.317 | 0.409 | **.363** |
| | LB/HR | 0.0110 | 0.0142 | **0.0126** |
| Sulfur Dioxide | PPM @ 5 % O2 | 5.41 | 4.12 | **4.77** |
| | LB/MMBtu | 0.010 | 0.008 | **.009** |
| | LB/HR | 0.0004 | 0.0003 | **.004** |
| THC as Methane | PPM @ 5 % O2 | 38.06 | 36.99 | **37.53** |
| | LB/MMBtu | 0.018 | 0.018 | **0.018** |
| | LB/HR | 0.0006 | 0.0006 | **.0006** |
| Carbon Dioxide | % dv | 2.80 | 2.80 | **2.80** |
| | LB/HR | 7.25 | 7.24 | **7.25** |
| Oxygen | % dv | 18.08 | 18.08 | **18.08** |
| Moisture Content | % | 1.8 | | **1.8** |
| Stack Flow | DSCFH | 2265 | | **2265** |
| | ACFH | 3542 | | **3542** |
| Stack Temp | Degrees F | 340 | | **340** |

## Claims

1. A method of producing a wood biomass fuel, comprising:applying calcium carbonate to wood biomass to form a mixture; and forming a wood biomass fuel from the mixture at a temperature ranging from 288°C (550°F) to 343°C (650°F).

2. The method of claim 1, wherein wood biomass fuel is formed from the mixture at a temperature ranging from 296°C (565°F) to 302°C (575°F).

3. The method of claim 1, wherein the wood biomass has a moisture content ranging from 10 weight % to 25 weight %.

4. The method of claim 3 wherein the wood biomass has a moisture content ranging from 13 weight % to 15 weight %.

5. The method of claim 1, wherein the calcium carbonate is in an amount ranging from 0.2 weight % to 2 weight % of the wood biomass.

6. The method of claim 5 wherein the calcium carbonate is in an amount ranging from 1.8 weight % to 2 weight % of the wood biomass.

7. The method of claim 1, wherein the calcium carbonate covers 80 % to 100 % of the wood biomass.

8. The method of claim 7, wherein the calcium carbonate covers 90 % to 100 % of the wood biomass.

## Patentansprüche

1. Verfahren zur Herstellung eines Holzbiomassebrennstoffs, das Folgendes umfasst: Anwenden von Calciumcarbonat auf Holzbiomasse, um eine Mischung zu bilden; und Bilden eines Holzbiomassebrennstoffs aus der Mischung bei einer Temperatur im Bereich von 288 °C (550 °F) bis 343 °C (650 °F).

2. Verfahren nach Anspruch 1, wobei Holzbiomassebrennstoff aus der Mischung bei einer Temperatur im Bereich von 296 °C (565 °F) bis 302 °C (575 °F) gebildet wird.

3. Verfahren nach Anspruch 1, wobei die Holzbiomasse einen Feuchtigkeitsgehalt im Bereich von 10 Gewichts-% bis 25 Gewichts-% aufweist.

4. Verfahren nach Anspruch 3, wobei die Holzbiomasse einen Feuchtigkeitsgehalt im Bereich von 13 Gewichts-% bis 15 Gewichts-% aufweist.

5. Verfahren nach Anspruch 1, wobei das Calciumcarbonat in einer Menge im Bereich von 0,2 Gewichts-% bis 2 Gewichts-% der Holzbiomasse vorliegt.

6. Verfahren nach Anspruch 5, wobei das Calciumcarbonat in einer Menge im Bereich von 1,8 Gewichts-% bis 2 Gewichts-% der Holzbiomasse vorliegt.

7. Verfahren nach Anspruch 1, wobei das Calciumcarbonat 80 % bis 100 % der Holzbiomasse bedeckt.

8. Verfahren nach Anspruch 7, wobei das Calciumcarbonat 90 % bis 100 % der Holzbiomasse bedeckt.

## Revendications

1. Procédé de production d'un combustible de biomasse de bois, comprenant : l'application de carbonate de calcium à une biomasse de bois pour former un mélange ; et la formation d'un combustible de biomasse de bois à partir du mélange à une température variant de 288 °C (550 °F) à 343 °C (650 °F).

2. Procédé selon la revendication 1, dans lequel le combustible de biomasse de bois est formé à partir du mélange à une température variant de 296 °C (565 °F) à 302 °C (575 °F).

3. Procédé selon la revendication 1, dans lequel la biomasse de bois a une teneur en humidité variant de 10 % en poids à 25 % en poids.

4. Procédé selon la revendication 3, dans lequel la biomasse de bois a une teneur en humidité variant de 13 % en poids à 15 % en poids.

5. Procédé selon la revendication 1, dans lequel le carbonate de calcium est présent dans une quantité variant de 0,2 % en poids à 2 % en poids de la biomasse de bois.

6. Procédé selon la revendication 5, dans lequel le carbonate de calcium est présent dans une quantité variant de 1,8 % en poids à 2 % en poids de la biomasse de bois.

7. Procédé selon la revendication 1, dans lequel le carbonate de calcium couvre de 80 % à 100 % de la biomasse de bois.

8. Procédé selon la revendication 7, dans lequel le carbonate de calcium couvre de 90 % à 100 % de la biomasse de bois.
